(19) Europäisches Patentamt
European Patent Office
Office européen des brevets

(11) EP 0 524 758 B1

(12) EUROPEAN PATENT SPECIFICATION

(45) Date of publication and mention
of the grant of the patent:
**28.10.1998 Bulletin 1998/44**

(51) Int Cl.$^6$: **H04B 10/18**, H04B 3/06

(21) Application number: 92306430.7

(22) Date of filing: 14.07.1992

(54) **Distortion compensation for analog optical systems**

Verzerrungskompensation bei optischen Analogsystemen

Compensation des distorsions pour systèmes optiques analogiques

(84) Designated Contracting States:
**DE FR GB**

(30) Priority: **23.07.1991 US 734411**

(43) Date of publication of application:
**27.01.1993 Bulletin 1993/04**

(73) Proprietor: **AT&T Corp.**
**New York, NY 10013-2412 (US)**

(72) Inventors:
• **Bergmann, Ernest Eisenhardt**
**Bethlehem, Pennsylvania 18015 (US)**
• **Kuo, Chien-Yu**
**Wescosville, Pennsylvania 18106 (US)**

(74) Representative:
**Watts, Christopher Malcolm Kelway, Dr. et al**
**Lucent Technologies (UK) Ltd,**
**5 Mornington Road**
**Woodford Green Essex, IG8 0TU (GB)**

(56) References cited:
**EP-A- 0 416 622          US-A- 4 016 497**

• **PATENT ABSTRACTS OF JAPAN vol. 8, no. 185 (E-262)(1622) 24 August 1984 & JP-A-59 77 714 (NIPPON DENKI)**
• **PATENT ABSTRACTS OF JAPAN vol. 3, no. 48 (E-106)24 April 1979 & JP-A-54 27 341 (NIPPON DENSHIN DENWA)**

## Description

## Background of the Invention

## Technical Field

The present invention relates to distortion compensation for analog optical communication systems and, more particularly, to the utilization of electronic distortion to compensate for nonlinearities present within the communication system.

## Description of the Prior Art

A growing area for analog optical communication systems is the common antenna television (CATV) network. In particular, recent advances in long wavelength distributed feedback (DFB) laser technology have made possible the transport of multiple CATV channels over one single mode fiber at $\lambda = 1.3 \mu m$. See, for example, "Lightwave subcarrier CATV transmission systems", by T.E. Darcie et al. appearing in IEEE Trans. Microwave Theory Tech., Vol. MTT-38, p. 524, 1990. The low levels of analog distortions and noise from the DFB lasers have been found to satisfy the system requirements such that the presence of many channels over a common communication path does not noticeably affect the reception of any particular channel.

It has been well documented, however, that nonlinearities of the DFB laser affect the composite second order (CSO) distortion of the system. Predistortion circuits have been developed to compensate for the laser nonlinearity, one exemplary arrangement being disclosed in U.S. Patent 4,992,754 issued to H. A. Blauvelt et al. In this particular arrangement, the distortion is compensated by applying a predistorted signal equal in magnitude and opposite in sign to the distortion introduced by the DFB laser. The input signal is split into two paths with the primary part of the signal applied directly to the device, with a time delay to compensate for delays in the secondary path. A predistorter in the secondary path generates harmonic signals, the amplitude of which is adjusted to match the amplitude of the distortion. A tilt adjustment is made to compensate the amplitude of the predistortion for the frequency dependence of distortion. A fine adjust of the delay is also included so that the phase of the predistortion signal is properly related to the phase of the primary signal.

Additional sources of nonlinearities not discussed in the Blauvelt et al. reference, for example, the interaction of FM chirp intrinsic to a DFB laser with fiber dispersion, can also affect the system performance, as discussed in the article "Dispersion-Induced Composite Second-Order Distortion at 1.5 $\mu m$", by E.E. Bergmann et al. appearing in IEEE Photonics Tech. Lett., Vol. 3, No. 1, January 1991, at pp. 59. As discussed in the Bergmann et al. reference, dispersion nonlinearity can be counteracted by utilizing dispersion-shifted fiber, reducing laser chirp, or limiting applications to relatively short spans (e.g., < 3km). Exemplary predistortion compensation for this combination is discussed in an article entitled "Electrical Predistortion to Compensate for Combined Effect of Laser Chirp and Fibre Dispersion", by H. Gysel et al. appearing in Electronic Letters, Vol. 27, No. 5 at pp. 421-3. Gysel et al. discuss the utilization of a varactor diode/inductor combination to build in the inverse of the expected distortion in the signal as applied to the optical transmitting device.

Within the past year, doped fiber amplifiers have become available which can be used in a CATV network to significantly increase the link loss budget. In particular, the erbium doped fiber amplifier (EDFA) is an attractive component since it exhibits high saturated output power, polarization independent amplification, and low intrinsic optical noise. The high saturated output power of an EDFA is of particular importance to CATV transport and distribution applications. Furthermore, its saturated gain characteristic does not respond to input signal variations at speeds faster than a few kilohertz because of the small absorption and stimulated emission cross sections, as well as the long metastable lifetime of the erbium ions. However, when an EDFA is used to amplify an analog optical AM CATV multiple carrier signal from a directly modulated DFB laser, an increase in the system distortion is observed.

In general, the combination of the above-noted dispersion sources, along with other nonlinear components contained within the communication system, result in an overall system-based nonlinear effect which may distort the system performance. Prior art compensation techniques, which address distortion at the component level (i.e., prior to installation in a communication system), cannot provide adequate compensation for the overall analog communication system.

Thus, a need exists for reducing the signal distortion attributed to the system-level nonlinearity present within an operating analog optical communication system.

## Summary of the Invention

The invention is as set out in the independent claims.

The need remaining in the prior art is addressed by the present invention which relates to distortion compensation for analog optical systems and, more particularly, to the utilization of electronic distortion to compensate for nonlinearities present within the communication system. The electronic distorter may comprise a predistorter (located at the optical transmitting device), a post distorter (located at the optical receiving device), or both.

In an exemplary embodiment of the present invention, a distorter arrangement comprises a message signal path and a distortion signal path. The input signal i (t) destined for either an optical transmitting device (i.e., predistorter configuration) or a system user (i.e., postdistorter configuration) is applied as an input to the distorter and divided between the two signal paths. The distortion path includes compensation means for characterizing the distortion-generating nonlinearities of the system and producing as an output a compensating signal which is essentially the inverse of the system's distortion and functions to substantially cancel the effects of the distortion. The input signal and distorted signal may be subsequently adjusted in terms of relative magnitude and phase, then combined and provided as the distorter output.

Correction for distortion introduced by fiber dispersion is provided by a harmonic generator, differentiator, attenuating means and time delay means, where, again, the attenuating means and time delay means may be adjustable. In one application, a first derivative signal is used for fiber dispersion compensation, where in general any derivative (or combination of derivatives) may be included. Further, separate distortion paths may be included, one for correcting system-based wavelength-dependent gain or loss, and another for dispersion compensation. In general, any suitable number of distortion signal paths may be used, and the various compensating signals summed and added to the original modulation signal.

Frequency-dependent AM- or FM-response related distortion (related to the optical transmitting device) may also be compensated utilizing a combination of a frequency distorter located at the input of the compensation means, and a frequency compensator located at the output of the compensation means. The predistorter is configured to essentially model the frequency-dependent circuit present at the input of the transmitting optical device and is located before the compensation means such that the compensation means "sees" the same frequency-dependent signal as the transmitting device.

An advantage of the arrangement of the present invention is that the magnitude and phase of the various distortion and modulation signals may be adjusted to compensate for the specific characteristics of the associated system or, alternatively, to modify the predistorter in response to changes within the system as a function of time.

Other and further advantages of the present invention will become apparent during the course of the following discussion and by reference to the accompanying drawings.

## Brief Description of the Drawing

Referring now to the drawings,

FIG. 1 illustrates an electronic distorter formed in accordance with the present invention;
FIG. 2 contains a graph illustrating the effect of fiber dispersion on composite second order (CSO) distortion;
FIG. 3 contains a graph illustrating the effect of a doped fiber amplifier on CSO distortion;
FIG. 4 illustrates an exemplary electronic distorter of the present invention, capable of compensating for both fiber dispersion and fiber amplifier-related distortion;
FIG. 5 contains a graph of calculated doped fiber amplifier gain and second order distortion curves, as a function of wavelength, for a predetermined input power level;
FIG. 6 contains a graph illustrates the reduction in CSO with the inclusion of an electronic predistorter of the present invention;
FIG. 7 illustrates an alternative electronic predistorter of the present invention, including frequency-dependent compensation elements; and
FIG. 8 illustrates an exemplary analog optical communication utilizing both a predistoter and postdistorter formed in accordance with the teachings of the present invention.

## Detailed Description

For analog optical communication systems such as amplitude modulated CATV, a significant source of system distortion can be attributed to composite second order (CSO), which is a measure of the relative power level of a desired signal in a predetermined channel (for test purposes, the desired signal would be the carrier channel) to the largest distortion peak due to second-order contributions, $\omega_1 \pm \omega_2$. Depending upon the application, the requirement may be that the CSO for any channel must be better than (i.e., lower than) -55dBc or -60 dBc. In general, it is not necessary to perform such an individual analysis since the distorter of the present invention is formed to characterize the system nonlinearities as a whole and provide compensation on the system level. As mentioned above, the distortion arrangement may be configured to provide compensation for any desired transmission wavelength, where common systems utilize either 1.3 µm or 1.55 µm. For optical systems operating at $\lambda = 1.55$ µm (desirable for the incorporation of erbium-doped fiber amplifiers), the intrinsic DFB laser chirp interacts with the dispersion of standard fiber (i.e., not dispersion-shifted fiber) to create levels of CSO which are unacceptable. As well, when an erbium-doped fiber amplifier (e.g., EDFA) is utilized to increase the available optical power, the above-mentioned laser chirp interacts with the EDFA gain profile (i.e., non-flat with respect to wavelength) in a manner which increases the level of CSO distortion.

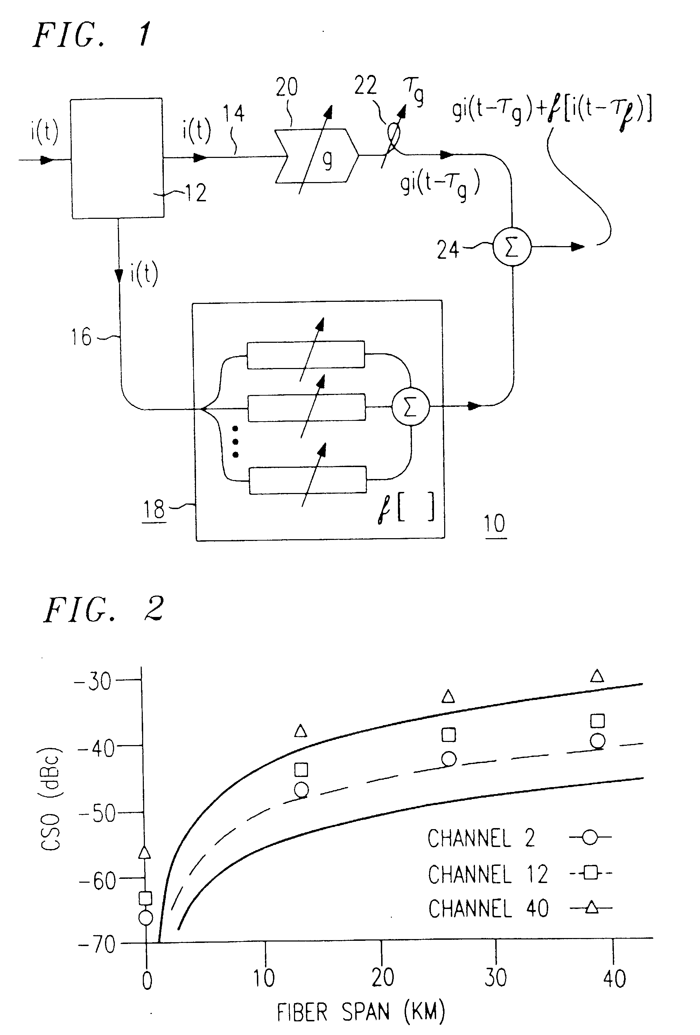

FIG. 1 illustrates a generalized block diagram of an exemplary electronic distorter 10 formed in accordance with the present invention, where as discussed above, the distorter may be located with an optical transmitter, and be defined as an electronic predistorter, or with an optical receiver, and be defined as an electronic postdistorter. In general, the discussion which follows is applicable to either configuration unless otherwise specified. Referring back to FIG. 1, distorter 10 receives as an input the (electronic) signal i(t) which is conventionally applied directly to either the optical transmitting device (predistorter configuration) or system user (postdistorter configuration). Within distorter 10, signal i(t) is split by branching means 12 into two separate paths, a message path 14 and distortion path 16. Distortion path 16 includes compensation means 18, as described in detail below, which is configured to provide a distortion signal which is the inverse of the distortion exhibited by the communication system (not shown). In particular, compensation means 18 may comprise a plurality of separate signal paths, where each path is utilized to form a different distortion signal component, as will be described in detail below. As indicated by the arrows within compensation means 18, each distortion signal path may be separately adjustable such that a distortion signal may be tailored to characterize the particular distortion introduced by the associated communication system. In general, the distortion of each system may be different, as a function of the length of communication fiber, number and type of nonlinear devices, FM chirp of the transmitting device, and so on. To attempt to characterize these nonlinearities before installation of the system is a difficult task, at best. Therefore, electronic distorter 10 of the present invention may be formed to include adjustable devices such that the distortion compensation may be performed subsequent to the deployment of the transmission system, providing as an output of compensation means 18 a signal $f[i(t)]$, where $f[.]$ depends upon the specific system nonlinearities. Referring back to FIG. 1, message path 14 may also include attenuating means 20 and time delay means 22 to form as the output from message path 14 a signal $gi(t - \tau_g)$. Attenuating means 20, which may be adjustable, is utilized to adapt the magnitude of input signal i(t) and time delay means 22 (which may also be adjustable) is utilized to adapt the phase $\tau_g$ of the input signal. Signals $gi(t - \tau_g)$ and $f[i(t)]$ are subsequently combined in an adder 24 and provided as the output of distorter 10.

One source of distortion in an analog optical communication system is the chromatic dispersion introduced by the transmitting optical fiber. The effect of fiber dispersion on distortion can be studied by measurements upon 1.55 $\mu$m DFB lasers as a function of fiber length. FIG. 2 illustrates the change in composite second order (CSO) distortion as a function of fiber span for CATV channel 2 (55.25 MHz, 31 CSO components), channel 12 (205.25 MHz, six CSO components), and channel 40 (319.25 MHz, 12 CSO components). As can be seen, the CSO becomes increasingly large as the length of the fiber increases and as the channel frequency increases. Additionally, it has been found that the CSO is worse for lasers with larger chirp. Theoretically, the CSO attributed to the laser chirp-fiber dispersion combination for a particular channel "j" can be represented as follows:

$$CSO_j \simeq \frac{b^2}{g^2} c_j \omega_j^2 \frac{2 m^2 \bar{p}^2}{(\frac{dp}{dl})^2},$$

where

$$b = \alpha_s D L \frac{dv}{dl} \frac{dp}{dl} \frac{\lambda^2}{c},$$

$$g = \alpha_s \frac{dp}{dl},$$

and
and $c_j$ is the number of CSO components, $\omega_j$ is the angular frequency at which distortion occurs, m is the modulation index, $\bar{p}$ is the average optical power, $\frac{dp}{dl}$ is the optical slope efficiency, $\alpha_s$ is the system attenuation, D is the fiber dispersion, L is the fiber length, $d\sigma/dl$ is the laser chirp, $\lambda$ is the average signal wavelength, and c is the speed of light.

Another influence on system nonlinearity may be the presence of a doped fiber amplifier, where the contribution to CSO distortion from such an amplifier has been found to result from inadvertent FM to AM conversion within the doped region of the fiber amplifier, or alternatively, from an external modulator such as a lithium niobate-based device. When, for example, a DFB laser is directly modulated through injection current, its optical frequency varies likewise. When this frequency modulated signal passes through the fiber amplifier (which has wavelength dependent gain G(v)), it experiences unwanted amplitude modulation, superimposed upon the desired amplitude modulation of the input signal. Therefore, the effective L-I curve from the combination of the DFB laser and fiber amplifier is either super-linear or sub-linear, thus resulting in the unwanted second order distortion.

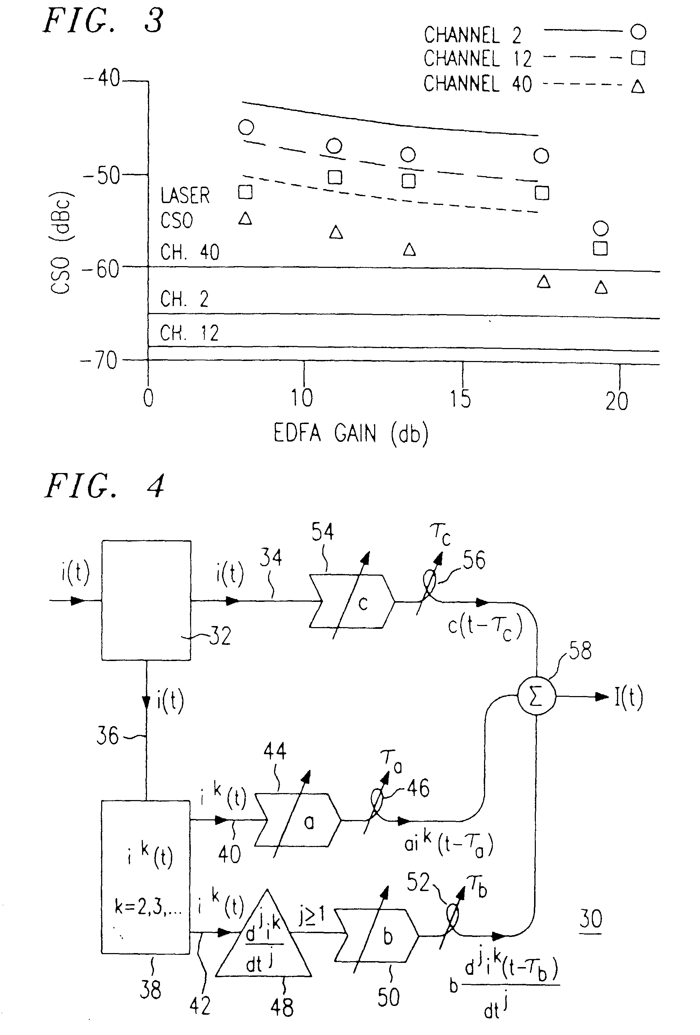

FIG. 3 illustrates CSO distortion for CATV channels 2, 12 and 40 at various input powers corresponding to various levels of gain saturation for an EDFA (with the pump power level held constant). As shown, the CSO's of the three channels are separated by approximately 7dB and 4dB, indicating that the distortion is dominated by frequency independent mechanisms. The second order distortion, denoted 2HD, related to the presence of an EDFA can be represented as:

$$2HD = \frac{\frac{\partial G}{\partial v} \frac{dv}{dl} I_m}{G(\bar{p}, v_0)},$$

where $\frac{\partial G}{\partial v}$ is defined as the slope of the EDFA curve, dv/dl is the frequency chirp, $I_m$ is the amplitude of the modulation current, and G ($\bar{p}$, $v_0$) is defined as the time invariant gain. The CSO distortion related to the second order distortion can be expressed as follows:

$$CSO_j = c_j[2HD]^2$$

Thus, even if the chromatic dispersion is limited, second order distortion related to EDFAs remains in the form of amplifier gain variations. These variations are related to the EDFA input power, pump power and temperature and, therefore, will depend upon the application.

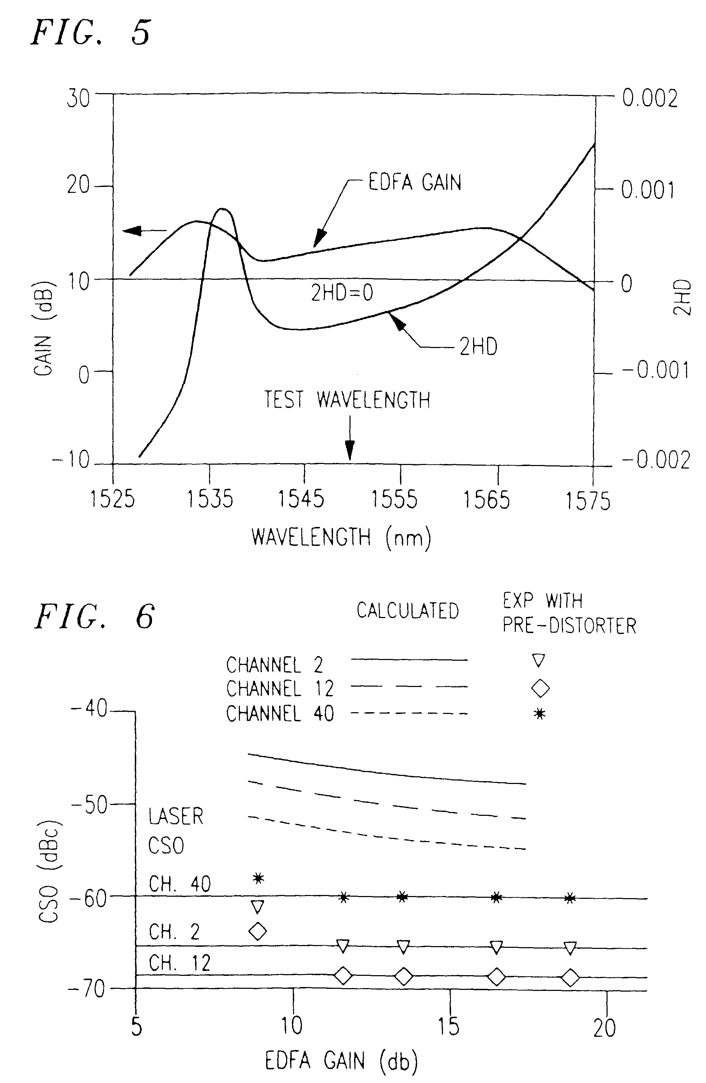

FIG. 4 illustrates an exemplary electronic distorter 30 capable of compensation for the various CSO distortions discussed above. An input signal i(t), normally applied directly to either an optical transmitting device (predistorter configuration) or system user (postdistorter configuration), is passed through distorter 30 so as to emerge in a form which provides increased linearity to the operation of the system. Referring to FIG. 4, predistorter 30 comprises a splitter 32 which directs input signal i(t) into a message signal path 34 and a distortion signal path 36. Distortion path 36 includes a harmonic generator 38 which functions to generate a predetermined harmonic of modulation signal i(t). In particular, harmonic generator 38 may provide a squared version $i^2$ (t) of the modulation signal, a cubed version $i^3$ (t), or any other suitable harmonic. When composite second order distortion in dominant in the system, a "squared" signal $i^2$ (t) is the preferred output. The output from distortion generator 38, denoted $i^k$ (t), is subsequently divided between a pair of distortion signal paths 40 and 42. As illustrated, exemplary distorter 30 utilizes a first distortion path 40 to compensate for system nonlinearities attributed to the presence of doped fiber amplifiers along the signal path, where CSO distortion attributed to such amplifiers has been discussed above. First distortion path 40 includes an attenuator 44 and time delay means 46, where the output signal from first distortion path 40 is denoted $ai^k$ (t - $\tau_a$). Both components 44 and 46 may be adjustable and thus modified by the system user to provide the correct level of distortion compensation for the doped fiber amplifiers included within the system. Further, the sign of the magnitude may also be modified within attenuator 44 (or by a separate inverter component), since the distortion as a function of amplifier gain may be either positive or negative. FIG. 5 contains plots of both EDFA gain and second order distortion (2HD) amplitude, as a function of wavelength. As shown, the sign of the distortion changes from positive to negative as a function of the wavelength. Therefore, for communication system utilizing doped fiber amplifiers, it may be necessary to include an inverting element.

Referring back to FIG. 4, second distortion path 42 within distorter 30 is utilized to compensate for the fiber dispersion, also referred to as chromatic dispersion, attributed to the fiber transmission path. Second distortion path 42 includes a differentiator 48, attenuator 50 and time delay means 52, where components 50 and 52 may be adjusted by the user to provide the correct level of distortion compensation. Differentiator 48 is utilized to form the j-the derivative of the modulation signal, where in the case of fiber dispersion correction, the first derivative is utilized. The output from second path 42 is defined by the term $b\frac{di^2(t-\tau_b)}{dt}$, assuming the first derivative signal is used. Signal i(t) along message signal path 34 may also be passed through an adjustable attenuator 54 and time delay 56 so as to form an output signal ci (t - $\tau_c$). The signals along all three paths are then subsequently added within a combiner 58 to form a distortion compensation output signal I(t), where I(t) may be expressed as follows:

$$I(t) = ci(t-\tau_c) + ai^k(t-\tau_a) + b\frac{d^ji^k(t-\tau_b)}{dt^j}$$

where $\tau_a$, $\tau_b$ and $\tau_c$ may be adjusted by the time delay means such that the three terms arrive simultaneously at combiner 58.

FIG. 6 illustrates the CSO, as a function of EDFA gain for a CATV system utilizing an electronic predistorter formed in accordance with the teachings of the present invention. As shown, the CSO has been reduced, for all channels, to an acceptable level of -60dBc or less, as the (saturated) amplifier gain is varied form 5 to 20dB.

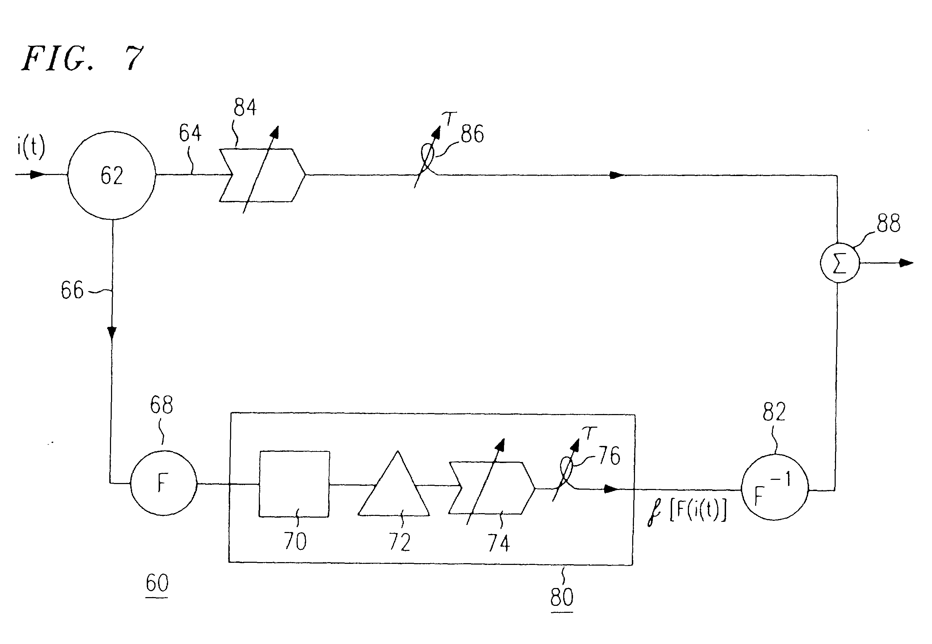

In addition to the distortion factors discussed above, frequency-dependent response may exist within the communication system. For example, the chirp of on optical transmitter is known to depend upon the frequency of the carrier. FIG. 7 illustrates an exemplary predistorter 60 of the present invention which addresses this frequency-dependent problem. Similar to arrangements described above, predistorter 60 is responsive to modulation signal i(t) and includes a splitter 62 which functions to divide signal i(t) into two components, sending a first component along message signal path 64 and a second component along distortion signal path 66. Distortion path 66 includes a frequency predistorter 68 which is formed to model as closely as possible the frequency dependence of the (packaged) transmitter response network F (not shown) at the input of the optical transmitting device. This pre-distortion frequency factor is necessary so that the remaining distortion components along signal path 66 "see" the same frequency-dependent signal as the optical device. Distortion path 66 further comprises a (harmonic) generator 70, differentiator 72, attenuator 74 and time delay means 76, generally referred to as distortion means 80, which functions as described above to form the required predistorted signal. It is to be noted that the relative placement of the components within distortion means 80 may be altered without affecting the operation of the distortion means. The output from distortion means 80, denoted f [F{i(t)}], is subsequently applied as an input to frequency compensation means 82, which is configured to perform the inverse frequency-dependent function, denoted $F^{-1}$,

on the output of distortion means 80. The frequency-compensated output is subsequently combined with the output from message signal path 64 (which may also contain adjustable attenuating 84 and time delay 86 components) within an adder 88 to form the output pre-distorted signal l(t) which is subsequently applied as an input to the optical device.

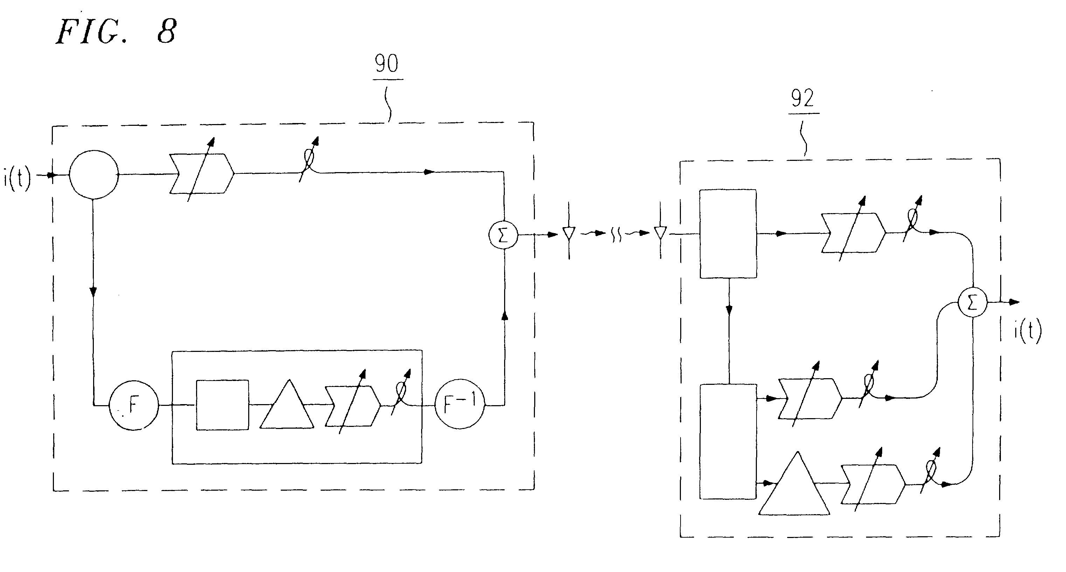

As mentioned above, electronic distortion compensation of the present invention may be utilized as either a predistorter (located with an optical transmitter) or a postdistorter (located with an optical receiver), or both. FIG. 8 illustrates an exemplary analog optical communication system utilizing both a predistorter 90 and a postdistorter 92, where each may be separately adjusted to correct for various system nonlinearities. For example, predistorter 90 may provide the frequency-dependent correction described above in association with FIG. 7, and postdistorter 92 may provide the correction for fiber dispersion and EDFA gain described above in association with FIG. 4. In general, both predistorter 90 and postdistorter may include attenuating and time delay components which may be configured to optimize the system performance.

## Claims

1. A distortion arrangement for compensating nonlinearities in an analog optical communication system, said distortion arrangement comprising

    splitting means (12), responsive to an input signal (i(t)), for dividing the input signal between a message signal path (14) and a distortion signal path (16);
    compensation means (18) disposed along the distortion signal path for characterizing system nonlinearities and generating a corrective signal comparable to the distortion associated with said communication system; said compensation means comprising an harmonic generation means (38) responsive to the input signal for forming a k-th harmonic version thereof
    attenuating means (20) for modifying the relative magnitudes of the signals along the message and distortion signal paths;
    time delay means (22) for aligning the phase of the signal along the message signal path with the phase of the signal along the distortion signal path; and
    combining means (24) for adding the phase adjusted output signals to form the output signal of the distortion arrangement

    characterized in that
    said compensation means further comprises differentiating means (48) responsive to the output of the harmonic generator for forming the j-th derivation thereof.

2. A distortion arrangement as defined in claim 1 wherein the distortion arrangement is located with an optical transmitter and defined as a predistortion arrangement.

3. A distortion arrangement as defined in claim 1 wherein the distortion arrangement is located with an optical receiver and defined as a postdistortion arrangement.

4. A distortion arrangement as defined in claim 1 wherein the attenuating means is adjustable.

5. A distortion arrangement as defined in claim 1 wherein the time delay means is adjustable.

6. A distortion arrangement as defined in claim 1 wherein the attenuating means and the time delay means are disposed along the message signal path.

7. A distortion arrangement as defined in claims 1, 4 or 5 wherein the compensation means comprises

    attenuating means (44) responsive to the output of the harmonic generation means; and
    time delay means (46) responsive to the output of the harmonic generation means.

8. A distortion arrangement as defined in claim 7 wherein the harmonic generation means forms a second harmonic version of the input signal capable of compensating for second order distortion within the analog communication system.

9. A distortion arrangement as defined in claims 1, 4 or 5 wherein the arrangement further comprises inverting means disposed along the distortion signal path for changing the sign of the magnitude of the distortion signal.

10. A distortion arrangement as defined in claims 1, 4 or 5 wherein the compensation means further comprises

    attenuating means (50) responsive to the output of the differentiating means; and
    time delay means (52) responsive to the output of the attenuating means.

11. A distortion arrangement as defined in claims 1, 4 or 5 wherein the compensation means further comprises

    first attenuating means (44) responsive to the output of the harmonic generation means (38);

first time delay means (46) responsive to the output of the first attenuating means for generating a first distortion output signal ;

second attenuating means (50) responsive to the output of the differentiating means;

second time delay means (52) responsive to the output of the second attenuating means for generating a second distortion output signal; and

combining means (58) for adding the output signals from the message signal path, first distortion signal path and second distortion signal path to form the output signal of the distortion arrangement.

12. A distortion arrangement as defined in claim 11 wherein any combination of the first and second attenuating means and the first and second time delay means are adjustable.

13. A distortion arrangement as defined in claims 11 or 12 wherein the harmonic generation means utilizes k=2 to form a second harmonic signal.

14. A distortion arrangement as defined in claims 1, 4 or 5 wherein the arrangement further comprises frequency compensating means including

frequency predistortion means (68), configured to model the frequency-dependent input characteristic of an optical transmitting device, the frequency predistortion means disposed at the input to the compensation means; and frequency compensating means (82) disposed at the output of the compensation means, the frequency compensating means configured to essentially cancel the frequency-dependent response at the input of the optical device.

15. A distortion arrangement as defined in claims 1, 4 or 5 wherein the arrangement further comprises a postdistortion unit located with an optical receiving device, said postdistortion unit comprising

splitting means, responsive to an input signal, for dividing the input signal between a message signal path and a distortion signal path; compensation means disposed along the distortion signal path for characterizing system nonlinearities and generating a corrective signal comparable to the distortion associated with said communication system; attenuating means for modifying the relative magnitudes of the signals along the message and distortion signal paths; time delay means for aligning the phase of the signal along the message signal path with the phase of the signal along the distortion signal path; and

combining means for adding the phase adjusted output signals to form the output signal of said postdistortion unit.

16. A method of forming a distortion compensation signal for an analog optical transmission system, the method comprising the steps of:

a) splitting an input modulation signal between a message signal path and a distortion signal path;
b) forming a k-th harmonic of the signal on the distortion signal path;
c) attenuating the relative magnitudes of the signal formed in step b) and the signal in the message signal path;
d) delaying in time the signal formed in step (c);
e) delaying in time the signal on the message signal path; and
f) combining the signal formed in step (e) with the signal formed in step (d)

characterized by
forming a j-th derivative of the signal formed in step (b) prior to attenuating the magnitude of the signal in step (c).

17. The method according to claim 16 wherein in performing step b), the second harmonic is formed to compensate for composite second order distortion.

18. The method according to claim 16 wherein in performing step c), the attenuation is adjustable.

19. The method according to claim 16 wherein in performing step d), the time delay is adjustable.

20. The method according to claim 16 wherein in performing step (e), the time delay is adjustable.

**Patentansprüche**

1. Verzerrungsanordnung zur Kompensation von Nichtlinearitäten in einem analogen optischen Kommunikationssystem, wobei die besagte Verzerrungsanordnung folgendes umfaßt:

ein Aufspaltungsmittel (12), das auf ein Eingangssignal (i(t)) reagiert, zum Aufspalten des Eingangssignals zwischen einem Nachrichtensignalweg (14) und einem Verzerrungssignalweg (16);
ein Kompensationsmittel (18), das entlang dem Verzerrungssignalweg angeordnet ist, zur Charakterisierung von Systemnichtlinearitäten und zur Erzeugung eines Korrektursignals, das mit der dem besagten Kommunikationssystem zugeordneten Verzerrung verglichen werden kann; wobei das besagte Kompensationsmittel ein Oberschwingungserzeugungsmittel (38) umfaßt, das auf das Eingangssignal reagiert, um eine k-te Oberschwingungsversion dieses Signals zu bilden;

ein Dämpfungsmittel (20) zur Modifizierung der relativen Größen der Signale entlang dem Nachrichten- und dem Verzerrungssignalweg;

ein Zeitverzögerungsmittel (22) zum Abgleichen der Phase des Signals entlang dem Nachrichtensignalweg mit der Phase des Signals entlang dem Verzerrungssignalweg; und

ein Kombinierungsmittel (24) zum Addieren der phasenjustierten Ausgangssignale zur Bildung des Ausgangssignals der Verzerrungsanordnung,

dadurch gekennzeichnet, daß

das besagte Kompensationsmittel weiterhin ein Differenzierungsmittel (48) umfaßt, das auf das Ausgangssignal des Oberschwingungsgenerators reagiert, um die j-te Ableitung dieses Signals zu bilden.

2. Verzerrungsanordnung nach Anspruch 1, wobei sich die Verzerrungsanordnung bei einem optischen Sender befindet und als eine Vorverzerrungsanordnung definiert ist.

3. Verzerrungsanordnung nach Anspruch 1, wobei sich die Verzerrungsanordnung bei einem optischen Empfänger befindet und als eine Nachverzerrungsanordnung definiert ist.

4. Verzerrungsanordnung nach Anspruch 1, wobei das Dämpfungsmittel einstellbar ist.

5. Verzerrungsanordnung nach Anspruch 1, wobei das Zeitverzögerungsmittel einstellbar ist.

6. Verzerrungsanordnung nach Anspruch 1, wobei das Dämpfungsmittel und das Zeitverzögerungsmittel entlang dem Nachrichtensignalweg angeordnet sind.

7. Verzerrungsanordnung nach Anspruch 1, 4 oder 5, wobei das Kompensationsmittel folgendes umfaßt:

ein Dämpfungsmittel (44), das auf das Ausgangssignal des Oberschwingungserzeugungsmittels reagiert; und

ein Zeitverzögerungsmittel (46), das auf das Ausgangssignal des Oberschwingungserzeugungsmittels reagiert.

8. Verzerrungsanordnung nach Anspruch 7, wobei das Oberschwingungserzeugungsmittel eine zweite Oberschwingungsversion des Eingangssignals bildet, die in der Lage ist, eine Verzerrung zweiter Ordnung in dem analogen Kommunikationssystem zu kompensieren.

9. Verzerrungsanordnung nach Anspruch 1, 4 oder 5, wobei die Anordnung weiterhin ein entlang dem Verzerrungssignalweg angeordnetes Invertierungsmittel zur Änderung des Vorzeichens der Größe des Verzerrungssignals umfaßt.

10. Verzerrungsanordnung nach Anspruch 1, 4 oder 5, wobei das Kompensationsmittel weiterhin folgendes umfaßt:

ein Dämpfungsmittel (50), das auf das Ausgangssignal des Differenzierungsmittels reagiert; und

ein Zeitverzögerungsmittel (52), das auf das Ausgangssignal des Dämpfungsmittels reagiert.

11. Verzerrungsanordnung nach Anspruch 1, 4 oder 5, wobei das Kompensationsmittel weiterhin folgendes umfaßt:

ein erstes Dämpfungsmittel (44), das auf das Ausgangssignal des Oberschwingungserzeugungsmittels (38) reagiert;

ein erstes Zeitverzögerungsmittel (46), das auf das Ausgangssignal des ersten Dämpfungsmittels reagiert, zur Erzeugung eines ersten Verzerrungs-Ausgangssignals;

ein zweites Dämpfungsmittel (50), das auf das Ausgangssignal des Differenzierungsmittels reagiert;

ein zweites Zeitverzögerungsmittel (52), das auf das Ausgangssignal des zweiten Dämpfungsmittels reagiert, zur Erzeugung eines zweiten Verzerrungs-Ausgangssignals; und

ein Kombinierungsmittel (58) zum Addieren der Ausgangssignale aus dem Nachrichtensignalweg, dem ersten Verzerrungssignalweg und dem zweiten Verzerrungssignalweg zur Bildung des Ausgangssignals der Verzerrungsanordnung.

12. Verzerrungsanordnung nach Anspruch 11, wobei alle Kombinationen des ersten und zweiten Dämpfungsmittels und des ersten und zweiten Zeitverzögerungsmittels einstellbar sind.

13. Verzerrungsanordnung nach Anspruch 11 oder 12, wobei das Oberschwingungserzeugungsmittel k=2 einsetzt, um ein zweites Oberschwingungssignal zu bilden.

**14.** Verzerrungsanordnung nach Anspruch 1, 4 oder 5, wobei die Anordnung weiterhin Frequenzkompensationsmittel umfaßt, die folgendes enthalten:

ein Frequenz-Vorverzerrungsmittel (68), das so konfiguriert ist, daß es die frequenzabhängige Eingangskennlinie einer optischen Sendevorrichtung modelliert, wobei das Frequenz-Vorverzerrungsmittel am Eingang des Kompensationsmittels angeordnet ist; und
ein Frequenzkompensationsmittel (82), das am Ausgang des Kompensationsmittels angeordnet ist, wobei das Frequenzkompensationsmittel so konfiguriert ist, daß es das frequenzabhängige Antwortsignal am Eingang der optischen Vorrichtung im wesentlichen annulliert.

**15.** Verzerrungsanordnung nach Anspruch 1, 4 oder 5, wobei die Anordnung weiterhin eine Nachverzerrungseinheit umfaßt, die sich bei einer optischen Empfangsvorrichtung befindet, wobei die besagte Nachverzerrungseinheit folgendes umfaßt:

ein Aufspaltungsmittel, das auf ein Eingangssignal reagiert, zum Aufspalten des Eingangssignals zwischen einem Nachrichtensignalweg und einem Verzerrungssignalweg;
ein Kompensationsmittel, das entlang dem Verzerrungssignalweg angeordnet ist, zur Charakterisierung von Systemnichtlinearitäten und zur Erzeugung eines Korrektursignals, das mit der dem besagten Kommunikationssystem zugeordneten Verzerrung verglichen werden kann;
ein Dämpfungsmittel zur Modifizierung der relativen Größen der Signale entlang dem Nachrichten- und dem Verzerrungssignalweg;
ein Zeitverzögerungsmittel zum Abgleichen der Phase des Signals entlang dem Nachrichtensignalweg mit der Phase des Signals entlang dem Verzerrungssignalweg; und
ein Kombinierungsmittel zum Addieren der phasenjustierten Ausgangssignale zur Bildung des Ausgangssignals der besagten Nachverzerrungseinheit.

**16.** Verfahren zur Bildung eines Verzerrungskompensationssignals für ein analoges optisches Übertragungssystem, wobei das Verfahren die folgenden Schritte umfaßt:

a) Aufspalten eines Eingangs-Modulationssignals zwischen einem Nachrichtensignalweg und einem Verzerrungssignalweg;
b) Bildung einer k-ten Oberschwingung des Signals auf dem Verzerrungssignalweg;
c) Dämpfung der relativen Größen des im Schritt b) gebildeten Signals und des Signals in dem Nachrichtensignalweg;

d) Zeitverzögerung des im Schritt (c) gebildeten Signals;
e) Zeitverzögerung des Signals auf dem Nachrichtensignalweg; und
f) Kombinieren des im Schritt (e) gebildeten Signals mit dem im Schritt (d) gebildeten Signal,

gekennzeichnet durch
Bildung einer j-ten Ableitung des Schritt (b) gebildeten Signals vor der Dämpfung der Größe des Signals im Schritt (c).

**17.** Verfahren nach Anspruch 16, wobei bei der Durchführung des Schritts b) die zweite Oberschwingung gebildet wird, um eine zusammengesetzte Verzerrung zweiter Ordnung zu kompensieren.

**18.** Verfahren nach Anspruch 16, wobei bei der Durchführung des Schritts c) die Dämpfung einstellbar ist.

**19.** Verfahren nach Anspruch 16, wobei bei der Durchführung des Schritts d) die Zeitverzögerung einstellbar ist.

**20.** Verfahren nach Anspruch 16, wobei bei der Durchführung des Schritts (e) die Zeitverzögerung einstellbar ist.

**Revendications**

**1.** Agencement de distorsion pour compenser les non-linéarités dans un système de communication optique analogique, ledit agencement de distorsion comprenant

un moyen de division (12), sensible à un signal d'entrée (i(t)), pour diviser le signal d'entrée entre un trajet pour signaux de message (14) et un trajet pour signaux de distorsion (16);
un moyen de compensation (18) disposé le long du trajet pour signaux de distorsion pour caractériser les non-linéarités du système et générer un signal de correction comparable à la distorsion associée audit système de communication; ledit moyen de compensation comprenant un moyen de génération d'harmoniques (38) sensible au signal d'entrée pour former une version de k$^e$ harmonique de celui-ci;
un moyen d'atténuation (20) pour modifier les grandeurs relatives des signaux le long des trajets pour signaux de message et de distorsion;
un moyen de retard temporel (22) pour aligner la phase du signal le long du trajet pour signaux de message avec la phase du signal le long du trajet pour signaux de distorsion; et
un moyen de combinaison (24) pour ajouter les signaux de sortie réglés en phase en vue de former le signal de sortie de l'agencement de distorsion

caractérisé en ce que
ledit moyen de compensation comprend en outre un moyen de différenciation (48) sensible à la sortie du générateur d'harmonique pour former la j<sup>e</sup> dérivée de celle-ci.

2. Agencement de distorsion selon la revendication 1, dans lequel l'agencement de distorsion est placé avec un émetteur optique et défini comme un agencement de prédistorsion.

3. Agencement de distorsion selon la revendication 1, dans lequel l'agencement de distorsion est placé avec un récepteur optique et défini comme un agencement de postdistorsion.

4. Agencement de distorsion selon la revendication 1, dans lequel le moyen d'atténuation est réglable.

5. Agencement de distorsion selon la revendication 1, dans lequel le moyen de retard temporel est réglable.

6. Agencement de distorsion selon la revendication 1, dans lequel le moyen d'atténuation et le moyen de retard de temps sont disposés le long du trajet pour signaux de message.

7. Agencement de distorsion selon les revendications 1, 4 ou 5, dans lequel le moyen de compensation comprend

un moyen d'atténuation (44) sensible à la sortie du moyen de génération d'harmoniques; et
un moyen de retard temporel (46) sensible à la sortie du moyen de génération d'harmoniques.

8. Agencement de distorsion selon la revendication 7, dans lequel le moyen de génération d'harmoniques forme une version de deuxième harmonique du signal d'entrée capable de compenser une distorsion de deuxième ordre à l'intérieur du système de communication analogique.

9. Agencement de distorsion selon les revendications 1, 4 ou 5, dans lequel l'agencement comprend en outre un moyen d'inversion disposé le long du trajet pour signaux de distorsion pour changer le signe de la grandeur du signal de distorsion.

10. Agencement de distorsion selon les revendications 1, 4 ou 5, dans lequel le moyen de compensation comprend en outre

un moyen d'atténuation (50) sensible à la sortie du moyen de différenciation; et
un moyen de retard temporel (52) sensible à la sortie du moyen de différenciation.

11. Agencement de distorsion selon les revendications 1, 4 ou 5, dans lequel le moyen de compensation comprend en outre

un premier moyen d'atténuation (44) sensible à la sortie du moyen de génération d'harmoniques (38);
un premier moyen de retard temporel (46) sensible à la sortie du premier moyen d'atténuation pour générer un premier signal de sortie de distorsion;
un deuxième moyen d'atténuation (50) sensible à la sortie du moyen de différenciation;
un deuxième moyen de retard temporel (52) sensible à la sortie du deuxième moyen d'atténuation pour générer un deuxième signal de sortie de distorsion; et
un moyen de combinaison (58) pour ajouter les signaux de sortie provenant du trajet pour signaux de message, du trajet du premier signal de distorsion et du trajet du deuxième signal de distorsion pour former le signal de sortie de l'agencement de distorsion.

12. Agencement de distorsion selon la revendication 11, dans lequel n'importe quelle combinaison des premier et deuxième moyens d'atténuation et des premier et deuxième moyens de retard temporel est réglable.

13. Agencement de distorsion selon les revendications 11 ou 12, dans lequel le moyen de génération d'harmoniques utilise k=2 pour former un signal de deuxième harmonique.

14. Agencement de distorsion selon les revendications 1, 4 ou 5, dans lequel l'agencement comprend en outre un moyen de compensation de fréquence comportant

un moyen de prédistorsion de fréquence (68), configuré pour modéliser la caractéristique d'entrée dépendant de la fréquence d'un dispositif d'émission optique, le moyen de prédistorsion de fréquence étant disposé à l'entrée du moyen de compensation; et
un moyen de compensation de fréquence (82) disposé à la sortie du moyen de compensation, le moyen de compensation de fréquence étant configuré pour annuler essentiellement la réponse dépendant de la fréquence à l'entrée du dispositif optique.

15. Agencement de distorsion selon les revendications 1, 4 ou 5, dans lequel l'agencement comprend en outre une unité de postdistorsion placée avec un dispositif de réception optique, ladite unité de postdistorsion comprenant

un moyen de division, sensible à un signal d'entrée, pour diviser le signal d'entrée entre un trajet pour signaux de message et un trajet pour signaux de distorsion;

un moyen de compensation disposé le long du trajet pour signaux de distorsion pour caractériser les non-linéarités du système et générer un signal de correction comparable à la distorsion associée audit système de communication;

un moyen d'atténuation pour modifier les grandeurs relatives des signaux le long des trajets pour signaux de message et de distorsion;

un moyen de retard temporel pour aligner la phase du signal le long du trajet pour signaux de message avec la phase du signal le long du trajet pour signaux de distorsion; et

un moyen de combinaison pour ajouter les signaux de sortie réglés en phase en vue de former le signal de sortie de ladite unité de postdistorsion.

16. Méthode de formation d'un signal de compensation de distorsion pour un système de transmission optique analogique, la méthode comprenant les étapes de:

a) division d'un signal de modulation d'entrée entre un trajet pour signaux de message et un trajet pour signaux de distorsion;

b) formation d'un $k^e$ harmonique du signal sur le trajet pour signaux de distorsion;

c) atténuation des grandeurs relatives du signal formé à l'étape b) et du signal dans le trajet pour signaux de message;

d) retard dans le temps du signal formé à l'étape (c);

e) retard dans le temps du signal sur le trajet pour signaux de message; et

f) combinaison du signal formé à l'étape (e) avec le signal formé à l'étape (d)

caractérisée par

la formation d'une $j^e$ dérivée du signal formé à l'étape (b) avant l'atténuation de la grandeur du signal à l'étape (c).

17. Méthode selon la revendication 16, dans laquelle lors de l'exécution de l'étape b), le deuxième harmonique est formé pour compenser la distorsion de deuxième ordre composée.

18. Méthode selon la revendication 16, dans laquelle lors de l'exécution de l'étape c), l'atténuation est réglable.

19. Méthode selon la revendication 16, dans laquelle lors de l'exécution de l'étape d), le retard temporel est réglable.

20. Méthode selon la revendication 16, dans laquelle lors de l'exécution de l'étape e), le retard temporel est réglable.

# FIG. 1

# FIG. 2

*FIG. 3*

*FIG. 4*

# FIG. 5

# FIG. 6

FIG. 7

EP 0 524 758 B1

FIG. 8